# EUROPEAN PATENT SPECIFICATION

(11) **EP 2 556 281 B1**
(45) Date of publication and mention of the grant of the patent: **02.05.2018**
(21) Application number: 11766206.4
(22) Date of filing: 04.04.2011
(51) Int. Cl.: F16K 31/53, E21B 34/10, F15B 15/06, F16K 3/24, F16K 31/04, F16K 31/00

(54) **DEVICE FOR ELECTROMECHANICAL ACTUATOR**
VORRICHTUNG FÜR EINEN ELEKTROMECHANISCHEN AKTUATOR
DISPOSITIF POUR ACTIONNEUR ÉLECTROMÉCANIQUE

(30) Priority: 16.03.2011 NO 20110403; 07.04.2010 NO 20100491
(43) Date of publication of application: 13.02.2013
(73) Proprietor: Electrical Subsea & Drilling AS, 5343 Straume (NO)
(72) Inventor: ERIKSEN, Egil, 6847 Vassenden (NO)
(74) Representative: Håmsø Patentbyrå AS
(86) International application number: PCT/NO2011/000117
(87) International publication number: WO 2011/126378

(56) References cited:
- NO-A- 20 090 907
- NO-B1- 322 680
- US-A- 3 524 526
- US-A- 3 908 959
- US-A- 4 570 903
- US-A- 4 794 309
- US-A- 5 295 907
- US-A- 5 983 743

## Description

The invention relates to a valve actuator, the valve actuator being provided with a roller screw nut surrounding a portion of an actuator slide and being in engagement with an external threaded portion of an actuator slide, the roller screw nut being axially fixed relative to the actuator slide, the actuator slide being in rotation-preventing engagement with a portion of an actuator mounting or a valve housing, and the roller screw nut being provided with an externally toothed wheel connected via a first set of transmission elements with a first driving motor.

In what follows, the function of the actuator is illustrated by the actuator being connected to an underwater choke valve, the actuator being used for quick adjustment of the valve between the closed and open positions and into intermediate positions in order to regulate the flow through the valve.

Actuators with stepped regulation by means of a hydraulic valve operation for controlling underwater choke valves, is generally used. This takes a long time; typically, 180 steps from the open to the closed valve is usual. Several operators in the oil industry have requirements for choke valves to be closed in less than 30 seconds when a well flow is shut down. Quick closing of the choke valve contributes to a gate valve at the outlet of a Christmas tree not closing to a full well flow, thereby hydrate formation can be prevented, and problems with wear in hydraulic control valves by stepped actuation are avoided.

WO/2003/021077 discloses an actuator with a planetary roller screw mechanism, which is moved axially via hydraulic actuation and converts the axial motion into rotation of the centre screw.

US 2009/0211762 A1 discloses a modular electric-actuator solution for subsea valves, in which, by rotation of a threaded mandrel on the end of an electromotor axle, a ball nut with an extension sleeve, which surrounds the end of the mandrel when it is in the inner position, is moved.

WO 2006/071124 A1 discloses an electric-actuator solution, which transmits the torque from a driving motor to a threaded mandrel, which moves a roller nut, which is connected to an actuating mechanism, axially.

US3908959A discloses a device for controlling fluid flow, wherein a valve member is mounted in a housing for displacement between an open position by means of an attached rod, which is provided with an external thread engaging an internal thread of a sleeve which is driven in rotation about the rod by a gear transmission, whereby the rotation of the sleeve is transformed into longitudinal displacement of the rod. The gear is driven by an electric motor provided with a handwheel or a similar manual actuating member attached to the shaft of the motor so that the actuating rod may be driven manually in case of breakdown of the motor.

US4794309A discloses a control valve designed to be actuated by an actuator, which includes a servomotor. The servomotor is connected to a valve rod through a reduction gear device and a ball screw device and drives the valve rod so as to move a valve plug into and out of contact with a valve seat, thereby controlling the degree of opening of the control valve. The reduction gear device comprises a spur gear train including spur gears. A manual handle is connected to the reduction gear device through a gear.

US5295907A discloses a device for limiting the torque transmitted from a drive shaft to a driven shaft. In an actuator, a ball nut is rotated by an electric motor. An output shaft of the motor is connected to a centrifugal clutch and a torque-limiting device. An output shaft of the torque-limiting device is connected to a pinion. The pinion drives a gear, which rotates a shaft and pinion, which is in engagement with large diameter gear. This gear rotates a tubular sleeve and a ball nut and thus causes a valve stem to move longitudinally to its operating position and to compress a spring. A handwheel can be pushed downwardly against a spring into engagement with the upper end of the shaft to rotate the ball nut to move the valve stem to its operating position, if for some reason the electric motor is broken.

US5983743A discloses an actuator assembly for moving a device between a retracted and extended position in which a ball screw is connected to the device and is in threaded engagement with a ball nut so that, upon rotation of the ball nut, the ball screw moves between a retracted and an extended position. A gear train connects a motor and the ball nut for transferring torque therebetween to rotate the nut member. The gear train includes a shaft, which is coupled to a spur gear. Rotation of an output shaft of the motor causes corresponding rotation of the spur gear and the shaft.

The invention has for its object to remedy or reduce at least one of the drawbacks of the prior art, or at least provide a useful alternative to the prior art.

The object is achieved through features, which are specified in the description below and in the claims that follow.

A valve actuator is provided, in which the rotation of a slide nut results in an axial movement of an actuator slide, which is connected to a valve slide arranged in a valve housing.

The invention relates more specifically to a valve actuator, wherein
the valve actuator is provided with a roller screw nut surrounding a portion of an actuator slide and being in engagement with an external threaded portion arranged on the actuator slide, the roller screw nut being axially fixed relative to the actuator slide;
the actuator slide is in rotation-preventing engagement with a portion of an actuator mounting or a valve housing; and
the roller screw nut is provided with an externally toothed wheel connected via a first set of transmission elements to a first driving motor, characterized in that
the valve actuator is provided with a connecting device for a second, portable driving motor, and the connecting device is in engagement with the externally toothed wheel of the roller screw nut via a second set of transmission elements.
The first driving motor may be an electromotor arranged in a pressure-tight actuator housing.
The second set of transmission elements may include a friction coupling.
The second, portable driving motor may be a subsea torque tool.
To the roller screw nut or the first set of transmission elements, a position sensor may be connected, arranged to register the rotation of the roller screw nut.
In what follows, is described an example of a preferred embodiment visualized in the accompanying drawings, in which:
- Figure 1A: shows an axial section through a choke valve with a valve actuator according to the invention;
- Figure 1B: shows, on a larger scale, an axial section through a valve housing;
- Figure 1C: shows an axial section through the valve actuator;
- Figure 1D: shows a section of an axial section of the valve actuator - rotated 90° relative to figures 1A and 1C;

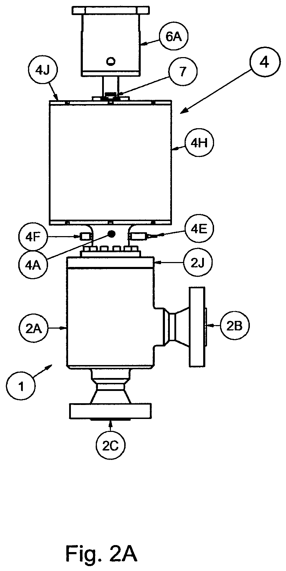

- Figure 2A: shows a side view of the choke valve and the valve actuator;

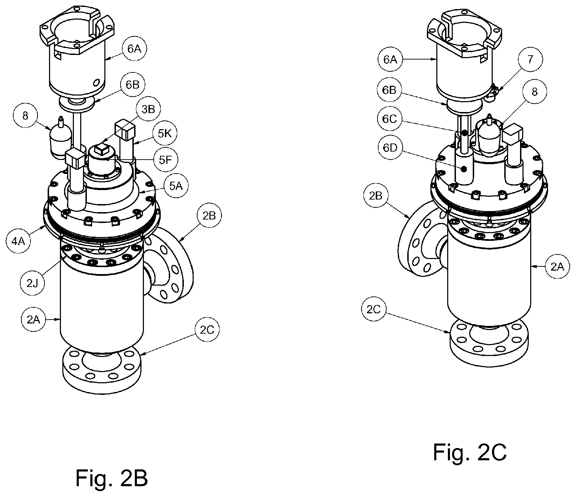

- Figure 2B: shows a perspective sketch of the choke valve and the valve actuator, the valve housing having been removed for reasons of exposition; and
- Figure 2C: shows a perspective sketch of the choke valve and the valve actuator rotated 90° relative to figure 2B.
In what follows, it is taken for a basis that a valve actuator is used to manoeuvre a choke valve. This does not imply a limitation in the scope of application of the invention, but serves as an example for the explanation of the features included in the invention, which are visualized in the accompanying drawings; the scope of the invention is limited only by the appended claims. In the drawings, the reference numeral 1 indicates a choke valve with a valve housing 2A with flange connections, known *per se,* for a supply port 2B and an outlet port 2C, respectively. A valve actuator 1A is arranged in a pressure-tight manner in an actuator housing 4 defined by a mounting flange 4A, an actuator jacket 4H and an end cap 4J.

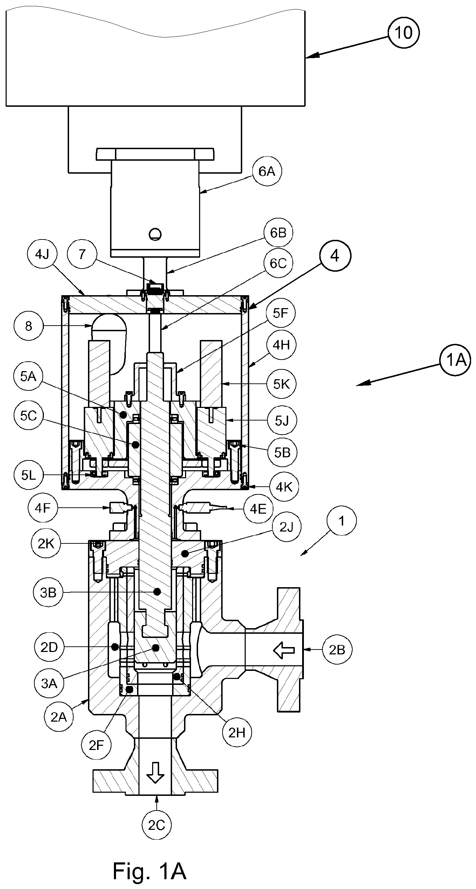

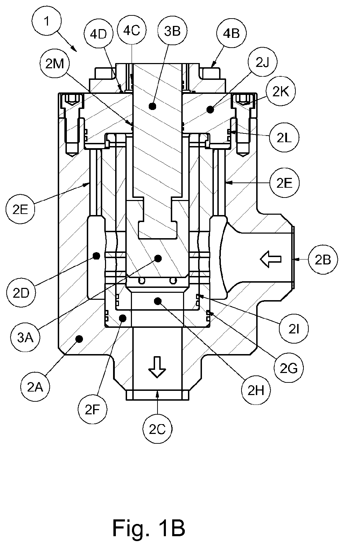

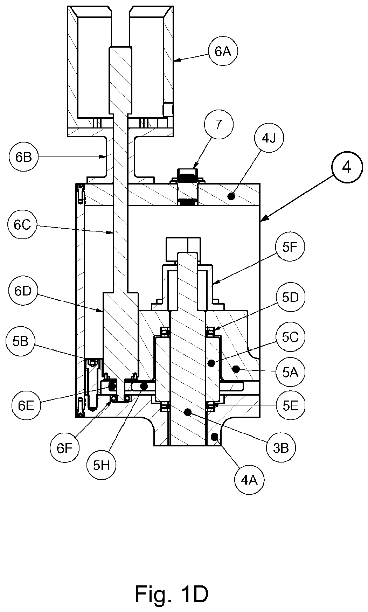

Figure 1A shows a longitudinal sectional drawing of the choke valve 1 assembled with the valve actuator 1A. Figure 1B shows a longitudinal sectional drawing of the valve housing 2A and appur-tenant parts.
When liquid from the supply port 2B enters an annular space 2D in the valve housing 2A, the liquid flow is divided into partial liquid streams passing through flow holes in outer and inner sleeves 2F, 2H in the valve housing 2A. The two sleeves 2F, 2H are provided with several sets of holes of different diameters. The partial liquid streams come together internally in the inner sleeve 2H and flow on through the outlet port 2C of the choke valve 1. At the outlet side of the choke valve 1, the outer sleeve 2F is provided with an outer sleeve gasket 2G, which seals against the inside of the valve housing 2A. An inner sleeve gasket 2I seals between the inner sleeve 2H and the outer sleeve 2F. An end cover 2J is attached to the valve housing 2A with attachment screws 2K. Externally on a lower edge around the end cover 2J, a first end cap gasket 2L is arranged, sealing against an internal edge of the valve housing 2A. A valve slide 3A is attached to the end of an actuator slide 3B passing through a centre opening in the end cover 2J. The valve slide 3A can be moved axially in the inner sleeve 2H. A second end cap gasket 2M arranged in the centre opening of the end cover 2J seals against the actuator slide 3B. The valve slide 3A is pressure-balanced by the annular space between the actuator slide 3B and the internal sleeve 2H being connected to the valve housing annular space 2D in the valve housing 2A via channels 2E in the valve housing 2A, bores in the end cover 2J and corresponding holes in the sleeves 2F, 2H.
The valve 1 is open when the valve slide 3A has been moved up against the bottom side of the end cover 2J of the valve housing 2A. When, by axial displacement of the actuator slide 3B, the valve slide 3A is moved through the inner sleeve 2H towards the outlet port 2C of the valve 1, it blocks liquid flow from the annular space 2D through the flow holes of the sleeves 2F, 2H. Intermediate positions of the valve slide 3A completely or partially blocking liquid flow through the flow holes will provide choking of the liquid flow. When the valve slide 3A is moved to an end position in the inner sleeve 2H, it seals against a seat in the inner sleeve 2H, and the valve 1 is closed.

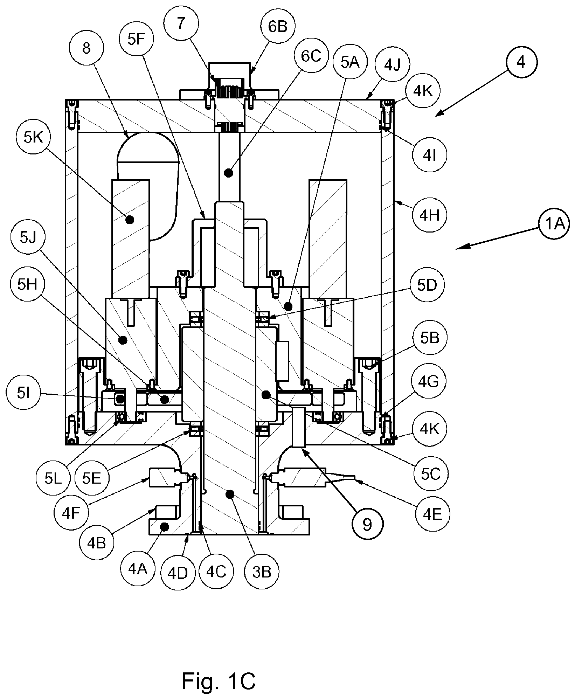

Figure 1C shows a longitudinal sectional drawing of the valve actuator 1A with the actuator housing 4 and internal actuating devices. A double mounting flange 4A with a through hole for the actuator slide 3B is attached with screws 4B to the end cover 2J of the valve housing 2A. A first mounting flange gasket 4C seals between the bore at the centre of the mounting flange 4A and the actuator slide 3B extending through it. A second mounting flange gasket 4D seals between the mounting flange 4A and the end cover 2J. A possible pressure build-up in the area between the gaskets 4C, 4D owing to leakage between the actuator slide 3B and the end cover 2J is detected by means of a pressure transmitter 4E which is connected to the area between the gaskets 4C, 4D through a bore in the mounting flange 4A. The pressure transmitter 4E is connected to a control system 10, and any detection of a leakage is accompanied by an alarm. The mounting flange 4A is also provided with a leakage port from the area between the gaskets 4C, 4D to a check valve 4F which communicates with the surroundings.
A first jacket gasket 4G is arranged between the cylindrical actuator jacket 4H enclosing the actuating devices and the outer edge of the mounting flange 4A, and a second jacket gasket 4I between the actuator jacket 4H and the outer edge of the end cap 4J. The cylindrical actuator jacket 4H is secured with bolts 4K to the outer edge of the mounting flange 4A and the outer edge of the end cap 4J, respectively.
An actuator mounting 5A is secured to the mounting flange 4A with screws 5B. The actuator mounting 5A is formed with a through-going centre bore for the actuator slide 3B and with an internal recess, which may accommodate a roller screw nut 5C and a first slide nut bearing 5D. A second slide nut bearing 5E for the other end of the roller screw nut 5C is recessed into the actuator mounting 4A. The slide nut 5C may be a so-called roller screw nut or ball screw nut, for example.
The actuator slide 3B is formed with an external threaded portion, which is in engagement with the roller screw nut 5C. The end of the actuator slide 3B has a non-circular profile corresponding to a centre opening in an end case 5F and preventing the actuator slide 3B from rotating when the roller screw nut 5C is set into rotary motion to displace the actuator slide 3B. The roller screw nut 5C is rotated via a toothed wheel transmission arranged in a recess between the mounting flange 4A and the actuator mounting 5A. The roller screw nut 5C is provided with an external toothed wheel 5H in mesh with two toothed wheels 5I mounted on the ends of respective slide gears 5J, which are each arranged on a first driving motor, typically an electric motor 5K. The slide gears 5J are each provided with a respective support bearing 5L recessed into the mounting flange 4A.

As it appears from the longitudinal sectional drawing 1D, in one embodiment, the roller screw nut 5C may be rotated by means of a second, portable driving motor, i.e. a torque tool 10 (see figure 1A) on an underwater vehicle (not shown). The torque tool 10 is connected to a connecting device 6A which is mounted on the end cap 4J via a flange 6B. The torque from the torque tool 10 is transmitted to a torque shaft 6C which is connected to a friction coupling 6D, which restricts the torque applied. From the friction coupling 6D, an axle extends with a toothed wheel 6E which is in mesh with the external toothed wheel 5H of the roller screw nut 5C. The torque shaft 6C, the friction coupling 6D and the toothed wheel 6E forms a second set of transmission elements. The toothed wheel transmission is placed in the recess between the mounting flange 4A and the actuator mounting 5A. The axle of the toothed wheel 6E is supported in a support bearing 6F recessed into the mounting flange 4A.

From the outside of the end cap 4J, a cable connection (not shown) runs through a cable bushing 7 for signal transmission and electrical power supply. It may possibly be relevant to have several cable bushings. On the inside of the actuator jacket 4H, several cable connections (not shown) extend between the cable bushing 7 and an electronics container (not shown). The actuator housing 4 is filled with an electrically insulating medium, for example silicone oil, and is pressure-compensated against the surrounding seawater pressure via a pressure compensator 8 known *per se.*

The actuator is provided with a position sensor 9 for registering the turns of the slide nut 5C.

## Claims

1. A valve actuator (1), wherein,
the valve actuator (1) is provided with a roller screw nut (5C) surrounding a portion of an actuator slide (3B) and being in engagement with an external threaded portion arranged on the actuator slide (3B), the roller screw nut (5C) being axially fixed relative to the actuator slide (3B);
the actuator slide (3B) is in rotation-preventing engagement with a portion (5F) of an actuator mounting (5A) or a valve housing (2A); and
the roller screw nut (5C) is provided with an externally toothed wheel (5H) connected via a first set of transmission elements (5I, 5J) with a first driving motor (5K), **characterized in that**
the valve actuator (1A) is provided with a connecting device (6A) for a second, portable driving motor (10), and the connecting device (6A) is in engagement with the externally toothed wheel (5H) of the roller screw nut (5C) via a second set of transmission elements (6C, 6D, 6E).

2. The valve actuator (1) according to claim 1, wherein the first driving motor is an electromotor (5K) arranged in a pressure-tight actuator housing (4).

3. The valve actuator (1) according to claim 1, wherein the second set of transmission elements (6C, 6D, 6E) include a friction coupling (6D).

4. The valve actuator (1) according to claim 3, wherein the second, portable driving motor (10) is an underwater torque tool.

5. The valve actuator (1) according to claim 1, wherein the roller screw nut (5C) or the first set of transmission elements (5I, 5J; 5H) is connected to a position sensor (9) arranged to register the rotation of the roller screw nut (5C).

## Patentansprüche

1. Ventilantrieb (1), wobei
der Ventilantrieb (1) mit einer Rollspindelmutter (5C) versehen ist, welche einen Teil eines Stellschiebers (3B) umgibt und welche mit einem Aussengewindeabschnitt, welcher am Stellschieber (3B) angebracht ist, in Eingriff ist, wobei die Rollspindelmutter (5C) relativ zum Stellschieber (3B) axial fixiert ist;
wobei der Stellschieber (3B) mit einem Abschnitt (5F) einer Antriebshalterung (5A) oder einem Ventilgehäuse (2A) in einem Verdrehsicherungseingriff ist; und
wobei die Rollspindelmutter (5C) mit einem aussenverzahnten Rad (5H) versehen ist, welches über einen ersten Satz von Übertragungselementen (5I, 5J) mit einem ersten Antriebsmotor (5K) verbunden ist,
**dadurch gekennzeichnet, dass**
der Ventilantrieb (1A) mit einer Verbindungsvorrichtung (6A) für einen zweiten, tragbaren Antriebsmotor (10) versehen ist, und dass die Verbindungsvorrichtung (6A) mit dem aussenverzahnten Rad (5H) der Rollspindelmutter (5C) über einen zweiten Satz von Übertragungselementen (6C, 6D, 6E) in Eingriff ist.

2. Ventilantrieb (1) nach Anspruch 1, wobei der erste Antriebsmotor ein Elektromotor (5K) ist, welcher in einem druckdichten Antriebsgehäuse (4) angeordnet ist.

3. Ventilantrieb (1) nach Anspruch 1, wobei der zweite Satz von Übertragungselementen (6C, 6D, 6E) eine Reibkupplung (6D) beinhaltet.

4. Ventilantrieb (1) nach Anspruch 3, wobei der zweite, tragbare Antriebsmotor (10) ein Unterwasser-Drehmomentwerkzeug ist.

5. Ventilantrieb (1) nach Anspruch 1, wobei die Rollspindelmutter (5C) oder der erste Satz von Übertragungselementen (5I, 5J; 5H) mit einem Positionssensor (9) verbunden ist, der angeordnet ist, um die Drehung der Rollspindelmutter (5C) zu registrieren.

## Revendications

1. Un actionneur de vanne (1), dans lequel,
l'actionneur de vanne (1) comporte un écrou de vis à rouleaux (5C) entourant une partie d'une glissière d'actionneur (3B) et étant engagé dans une partie filetée externe disposée sur la glissière d'actionneur (3B), l'écrou de vis à rouleaux (5C) étant fixé axialement par rapport à la glissière d'actionneur (3B) ;
la glissière d'actionneur (3B) est engagée de manière à empêcher une rotation dans une partie (5F) d'un support d'actionneur (5A) ou d'un carter de vanne (2A) ; et
l'écrou de vis à rouleaux (5C) comporte une roue dentée à l'extérieur (5H) connectée à travers un premier jeu d'éléments de transmission (5I, 5J) avec un premier moteur d'entraînement (5K), **caractérisé en ce que**
l'actionneur de vanne (1A) comporte un dispositif de connexion (6A) pour un second moteur d'entraînement (10) portable, et le dispositif de connexion (6A) est engagé dans la roue dentée à l'extérieur (5H) de l'écrou de vis à rouleaux (5C) à travers un second jeu d'éléments de transmission (6C, 6D, 6E).

2. L'actionneur de vanne (1) selon la revendication 1, dans lequel le premier moteur d'entraînement est un moteur électrique (5K) disposé dans un carter d'actionneur étanche à la pression (4).

3. L'actionneur de vanne (1) selon la revendication 1, dans lequel le second jeu d'éléments de transmission (6C, 6D, 6E) inclut un couplage à friction (6D).

4. L'actionneur de vanne (1) selon la revendication 3, dans lequel le second moteur d'entraînement (10) portable est un outil de couple sous-marin.

5. L'actionneur de vanne (1) selon la revendication 1, dans lequel l'écrou de vis à rouleaux (5C) ou le premier jeu d'éléments de transmission (5I, 5J, 5H) est connecté à un capteur de position (9) disposé pour détecter la rotation de l'écrou de vis à rouleaux (5C) .
